# EUROPEAN PATENT APPLICATION

(11) **EP 4 488 415 A1**
(43) Date of publication of application: **08.01.2025**
(21) Application number: 23184129.7
(22) Date of filing: 07.07.2023
(51) Int. Cl.: C25B 1/04, C25B 9/19, C25B 9/23, C25B 11/046, C25B 11/052, C25B 11/089, C25B 13/08

(54) **USE OF NITINOL AS A CATALYST FOR THE HYDROGEN EVOLUTION REACTION**

(71) Applicant: TOYOTA JIDOSHA KABUSHIKI KAISHA, Toyota-shi, Aichi-ken, 471 8571 (JP); Dutch Institute For Fundamental Energy Research, 5612 AJ Eindhoven (NL)
(72) Inventor: JOHNSON, Hannah, 1140 BRUSSELS (BE); TSAMPAS, Michail, 5612 AJ EINDHOVEN (NL); GHOSH, Sreetama, 5612 AJ EINDHOVEN (NL)
(74) Representative: Cabinet Beau de Loménie

(57) **Abstract**

The invention concerns a method for producing hydrogen, comprising:
- performing a hydrogen evolution reaction through an alkaline water electrolysis or alkaline membrane electrolysis process using an electrochemical cell comprising:
(a) an alkaline electrolyte solution comprising water,
(b) a cathode comprising a hydrogen evolution reaction catalyst, and
(c) an anode,
wherein the hydrogen evolution reaction catalyst is formed of a nickel-titanium alloy having a nickel atomic percentage lying in the range 50% to 56%, and wherein a temperature of at least 35°C is imposed to the alkaline electrolyte solution.

## Description

### BACKGROUND OF THE INVENTION

### 1. Field of the Invention

The invention relates to methods for producing hydrogen (H₂) through a hydrogen evolution reaction occurring during water electrolysis. The invention is remarkable in that a nickel-titanium alloy NiTi with a specific stoichiometry is used as a catalyst for this reaction.

### 2. Description of Related Art

It is known to produce hydrogen by performing a hydrogen evolution reaction through a water electrolysis process using an electrochemical cell. Platinum-based catalysts are commonly used to facilitate conversion of protons to H₂. These catalysts provide high yield of hydrogen formation but are very expensive and not based on abundant materials.

Research has been carried out to propose cheaper and more efficient catalysts based on abundant raw materials. In this connection, some nickel-based catalysts have been tested. However, the performances of such catalysts need to be improved to be competitive with platinum-based catalysts.

### SUMMARY OF THE INVENTION

In a first aspect, an embodiment of the present invention provides a method for producing hydrogen, comprising:
- performing a hydrogen evolution reaction through an alkaline water electrolysis or alkaline membrane electrolysis process using an electrochemical cell comprising:
   (a) an alkaline electrolyte solution comprising water,
   (b) a cathode comprising a hydrogen evolution reaction catalyst, and
   (c) an anode,
wherein the hydrogen evolution reaction catalyst is formed of a nickel-titanium alloy having a nickel atomic percentage lying in the range 50% to 56%, and wherein a temperature of at least 35°C is imposed to the alkaline electrolyte solution.

The nickel-titanium alloy consists of NiTi with a nickel atomic percentage lying in the range 50% to 56%. The nickel-titanium alloy may correspond to an alloy commercially available under the trade name "Nitinol".

For the sake of conciseness, the nickel-titanium alloy described above will be noted "NiTi alloy" in the description below. The invention relies on the use of the NiTi alloy as a hydrogen evolution reaction catalyst combined with the heating of the electrolyte solution. This leads to the formation of a particular structure on the catalyst surface, resulting in high performance catalyst for hydrogen evolution reaction with notably low overpotentials. More particularly, the heating results in obtaining a NiTi alloy wherein martensitic (monoclinic) phase has been transformed, totally or in part, to austenitic (cubic) phase, leading to a significant decrease of the overpotential which, in other words, means hydrogen production at lower electricity input. The NiTi alloy constitutes a higher efficiency catalyst resulting in lower energy input requirement for the water splitting reaction, and achieve exceptionally high current densities and low onset potentials compared to state-of-the-art catalyst i.e. Pt.

According to another embodiment, the temperature imposed to the alkaline electrolyte solution is at least 50°C, for example at least 55°C.

Operating in this temperature range further favors the transformation of martensitic phase into austenitic phase, thus further improving the performance of the catalyst.

According to another embodiment, the hydrogen evolution reaction is performed through an alkaline water electrolysis process and the temperature imposed to the alkaline electrolyte solution is at least 60°C, for example at least 70°C or at least 80°C.

Operating in this temperature range further favors the transformation of martensitic phase into austenitic phase, thus further improving the performance of the catalyst.

According to another embodiment, the hydrogen evolution reaction is performed through an alkaline membrane electrolysis process, and the temperature imposed to the alkaline electrolyte solution is less than 60°C.

Operating in this temperature range avoids any risk of membrane degradation.

According to still another embodiment, the alkaline electrolyte solution is a potassium hydroxide (KOH) or sodium hydroxide (NaOH) aqueous solution.

In particular, the hydrogen evolution reaction may be performed through an alkaline water electrolysis process and the concentration of the potassium hydroxide or sodium hydroxide aqueous solution may vary from 1 M to 6 M.

In a variant, the hydrogen evolution reaction may be performed through an alkaline membrane electrolysis process, and the concentration of the potassium hydroxide or sodium hydroxide aqueous solution may vary from 0.1 M to 1M.

Higher concentrations of NaOH or KOH in the electrolyte leads to better performance.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1A is a schematic diagram illustrating the implementation of the NiTi catalyst in an alkaline water electrolysis process according to an embodiment of the invention;
FIG. 1B is a schematic diagram illustrating the implementation of the NiTi catalyst in an alkaline membrane electrolysis process according to another embodiment of the invention;
FIG. 2 shows a portion of the Ni-Ti binary phase diagram;
FIG. 3 shows XRD patterns of the NiTi alloy at different temperatures;
FIG. 4A-4I shows experimental results comparing the performances of the method according to an embodiment of the invention with methods not covered by the invention.

### DETAILED DESCRIPTION OF EMBODIMENTS

The following description of the example embodiments refers to the accompanying drawings. It does not limit the disclosure. Instead, the scope of the disclosure is defined by the appended claims.

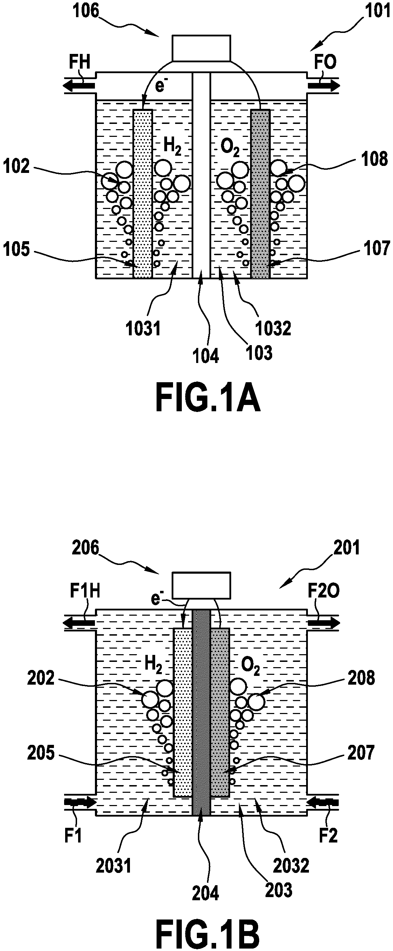

FIG. 1A and FIG. 1B illustrates two possible electrochemical cells that may be used for carrying out an embodiment of the invention.

The electrochemical cell 101 of FIG. 1A comprises an alkaline electrolyte solution 103. The alkaline electrolyte solution 103 may comprise water and hydroxide ions, notably water and potassium or sodium hydroxide (KOH or NaOH) for example at concentrations varying from 1 M to 6 M. Unless the contrary is specified, the concentrations are taken before starting the hydrogen evolution reaction.

The electrochemical cell 101 comprises a cathode 105 present in the alkaline electrolyte solution 103. The electrolyte on the cathodic side is designated as the catholyte 1031. The cathode 105 comprises a hydrogen evolution reaction catalyst formed of a NiTi alloy. The NiTi alloy is a binary nickel-titanium alloy comprising 50% to 56% of nickel in atomic percentage, the remainder being titanium (50% to 44% of titanium in atomic percentage). The catalyst is at least located on the electrically active outside surface of the cathode 105. The cathode 105 may be made entirely of the NiTi alloy or, in a variant, the cathode comprises a coating of the NiTi alloy, for example in the form of nanoparticles which may have a D50 size less than or equal to 100 nm, for example lying in the range 5 nm to 100 nm, for example lying the range 5 nm to 50 nm, covering an electrically conductive substrate formed of a different material. The hydrogen evolution reaction with hydrogen bubbles 102 occur at the cathode side 105. The flow of hydrogen H₂ outside the cell 101 is designated by the arrow FH. The electrochemical cell 101 also comprises an anode 107 present in the same alkaline electrolyte 103. The electrolyte on the anodic side is referred to as the anolyte 1032. Oxygen evolution reaction with oxygen bubbles 108 occur on the anode 107. The flow of oxygen O₂ outside the cell 101 is designated by the arrow FO. The cathodic and anodic sides of the cell are separated by a separator 104 and an external bias 106 is applied to drive the overall reaction.

The electrochemical cell 201 of FIG.1B comprises an alkaline electrolyte solution 203. The alkaline electrolyte solution 203 may comprise water and hydroxide ions, notably water and potassium or sodium hydroxide (KOH or NaOH) for example at concentrations varying from 0.1 M to 1 M.

The electrochemical cell 201 comprises a cathode 205 present in the alkaline electrolyte solution 203. The electrolyte on the cathodic side is designated as the catholyte 2031. The cathode 205 comprises a hydrogen evolution reaction catalyst formed of a NiTi alloy. The NiTi alloy is a binary nickel-titanium alloy comprising 50% to 56% of nickel in atomic percentage, the remainder being titanium (50% to 44% of titanium in atomic percentage). The catalyst is at least located on the electrically active outside surface of the cathode 205. The cathode 205 may be made entirely of the NiTi alloy or, in a variant, the cathode comprises a coating of the NiTi alloy, for example in the form of nanoparticles which may have a D50 size less than or equal to 100 nm, for example lying in the range 5 nm to 100 nm, for example lying the range 5 nm to 50 nm, covering an electrically conductive substrate formed of a different material. The hydrogen evolution reaction with hydrogen bubbles 202 occur at the cathode side 205. The electrochemical cell 201 also comprises an anode 207 present in the same alkaline electrolyte 203. The electrolyte on the anodic side is referred to as the anolyte 2032. Oxygen evolution reaction with oxygen bubbles 208 occur on the anode 207. The cathode 205 and anode 207 are sandwiched with an anion exchange membrane 204 in between and an external bias 206 is applied to drive the overall reaction. The anion exchange membrane 204 is located between the cathode 205 and the anode 207 and may be in contact with them. The catholyte 2031 and the anolyte 2032 can be recirculated in the respective cathodic and anodic chambers. The introduction of the catholyte 2031 in the cell 201 is designated by the arrow F1 and the introduction of the anolyte 2032 in the cell 201 is designated by the arrow F2. The catholyte 2031 is evacuated from the cell 201 along with hydrogen H₂ (arrow F1H) and the anolyte 2032 is evacuated from the cell 201 along with oxygen O₂ (arrow F2O).

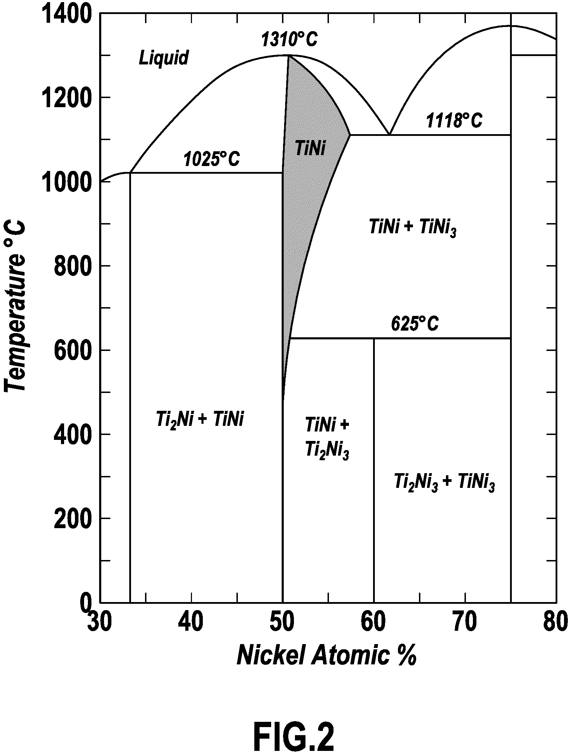

FIG. 2 shows a portion of the Ni-Ti binary phase diagram showing the light gray region related to the structure of interest NiTi. As indicated above, the nickel-titanium alloy may correspond to commercially available Nitinol grades with 50% to 56% nickel in atomic percentage. In this phase diagram, the temperature defines the thermal treatment that Ni and Ti need to undergo in order to form the required Nitinol. At room temperature, the thus formed Nitinol keeps the same NiTi stoichiometry. The nickel-titanium alloy has undergone a thermal treatment in the temperature range of 450°C to 1300°C before being used as the hydrogen evolution reaction catalyst to form the NiTi structure.

In both the electrochemical cells 101 or 201, the anode 107 or 207 may for example comprise a material selected from: Ni, NiFe, NiCo or NiCoFe based oxides and hydroxides. The anode 107 or 207 may in a variant comprise a material selected from: Ir or Ir alloy, Ru or Ru alloy, Pt or Pt alloy based oxides and hydroxides. The anode 107 or 207 may in a variant be in carbon, for example in glassy carbon. The anode 107 or 207 may be in the form of perforated plates, meshes, foams, felts or in the form of nanoparticles deposited on Ni or stainless steel porous substrates, preferentially with a porosity of 30% - 90%. The nanoparticles may have a D50 size less than or equal to 100 nm, for example lying in the range 5 nm to 100 nm, for example lying the range 5 nm to 50 nm. A potential difference between the anode 107 (or 207) and the cathode 105 (or 205) is imposed leading to water electrolysis and to the production, on the one hand, of hydrogen 102 (or 202) through a hydrogen evolution reaction at the cathode 105 (or 205), and, on the other hand, of oxygen 108 (or 208) at the anode 107 (or 207). This potential difference is imposed by an electricity source 106 (or 206) connected to the anode 107 (or 207) and to the cathode 105 (or 205) respectively.

The separator 104 may comprise a material selected from: zirconium oxide on a polymeric substrate (marketed under the name Zirfon^{™}), ion-solvating membranes based on polybenzimidazole (PBI) and blend membranes of polysulfone with polyvinylpyrrolidone (PSU-PVP).

The anion exchange membrane 204 may for example comprise a material selected from the group consisting of: quaternary ammonium groups, tertiary amine groups, secondary amine groups on a polystyrene, polysulfone, poly(ethersulfone), poly(vinylidene fluoride) (PVDF).

During the hydrogen evolution reaction, the temperature of the electrolyte is maintained at a value at least equal to 35°C, for example at least equal to 50°C or at least equal to 55°C. When an alkaline membrane electrolysis process is carried out as shown in FIG. 1B, the temperature imposed to the alkaline electrolyte solution 203 may lie in the range 35°C to 60°C, for example 50°C to 60°C or 55°C to 60°C. The temperature can be increased when an alkaline water electrolysis process is carried out as shown in FIG. 1A. In this case, the temperature imposed to the alkaline electrolyte solution may be at least equal to 60°C, for example at least equal to 65°C, for example at least equal to 70°C, for example at least equal to 75°C or at least equal to 80°C. The control of the temperature of the electrolyte is performed using a jacketed reactor in a water bath.

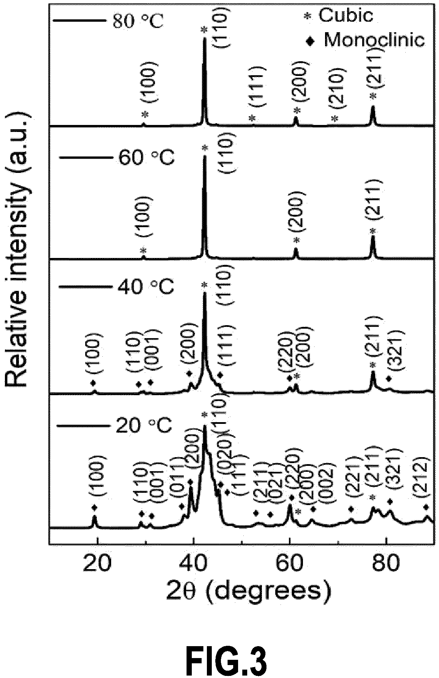

Whilst at room temperature, 20 °C, the NiTi alloy (Ni 50.2% to Ti 49.8% so Ni/Ti equals 1.008) is a mixture of two phases - martensite (monoclinic) and austenite (cubic), heating the catalyst results in the formation of only the austenite (cubic) phase. This is reflected by the XRD patterns provided in FIG. 3. The inventors found that the change from the martensite phase to the austenite phase coincides with a significant decrease in overpotential of the hydrogen evolution reaction.

### Example: 3 Electrode Test

Wires of various compositions were tested for the hydrogen evolution reaction. NiTi wires (2.0 mm diameter) having 50.2% at. Ni and 49.8% at. Ti were used. The wires were cut into specified lengths so that 15 mm remains immersed in the electrolyte such that the working electrode has a geometric surface area of 1 cm². Ni (99.98 % purity) and Ti (99.99 % purity) wires having 2.0 mm diameter and Pt (99.95 % purity) wire having 0.5 mm diameter were used in the present study. The electrocatalytic activities of the catalysts towards HER and the durability studies were performed in a standard three-electrode setup using a jacketed 50 ml electrochemical reactor. 37 ml of 1 M KOH was used as an electrolyte. A silicone griffin beaker heater with a PID temperature controller was used to regulate the temperature of the reactor. A *K*-type thermocouple was dipped inside the electrolyte, temperature was monitored using a multimeter throughout the experiment. It was ensured before each experiment that the temperature is stable at least for 1 h. All the electrodes were thoroughly cleaned before performing the electrochemical tests. For each particular temperature studied, a new NiTi sample was taken. Before all the electrochemical tests, the electrolyte was degassed with a nitrogen flow for 30 min and after that, the nitrogen flow was subsequently maintained during all tests. The NiTi wire served as the working electrode and a graphite rod was the counter electrode. The potentials were measured with respect to a reversible hydrogen electrode. The electrochemical measurements were performed using a potentiostat. Each catalyst was cycled from -0.05 V to -0.4 V for 500 cycles at a 50 mV s⁻¹ scan rate. Thereafter, a linear sweep voltammetry (LSV) was performed at 1 mV s⁻¹ scan rate to record the cathodic polarization current in the same potential range for all the catalysts. All the polarization curves mentioned in this work are the ones performed after 500 cycles and with a 1 mV s⁻¹ scan rate. All plots were corrected with *iR* compensation to account for the ohmic losses. The chronopotentiometric HER stability tests of the electrodes were carried out at a constant current density of -10 mA cm⁻². The faradaic efficiency measurement was done in a leak tight 100 ml reactor connected directly to a gas chromatograph to measure the evolved hydrogen gas with argon as a carrier gas.

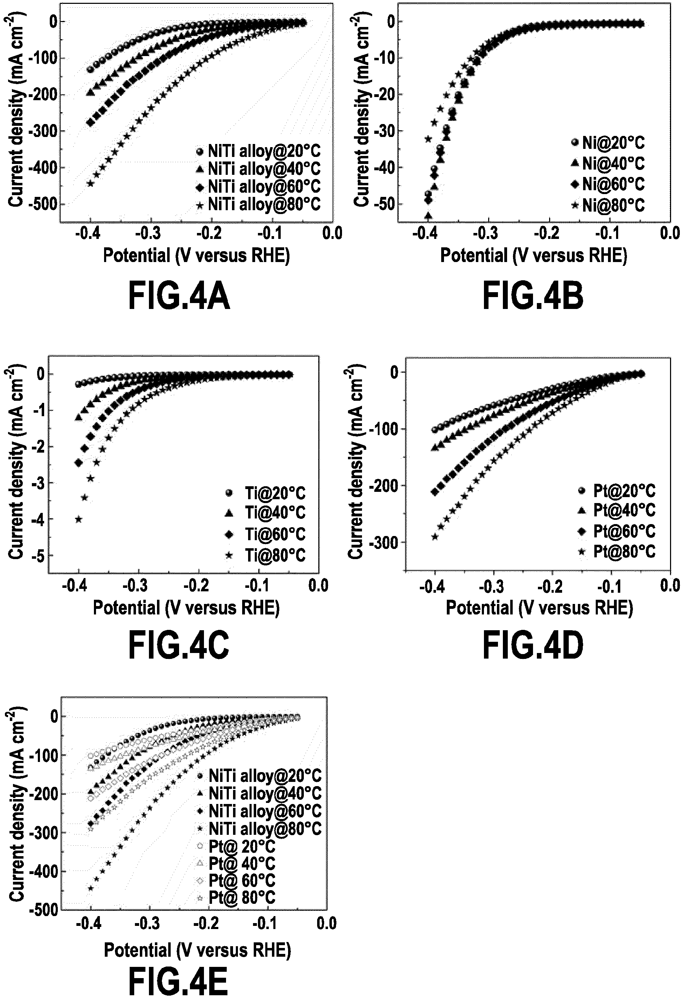

FIG. 4A-4I show the results obtained.

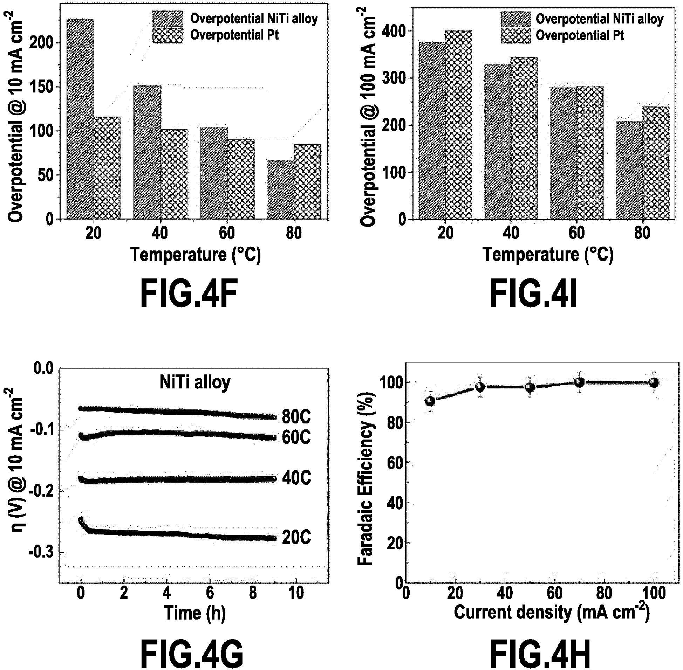

FIG. 4A-4D show polarization curves of (A) NiTi, (B) Ni, (C) Ti and (D) Pt wires at different temperatures presenting different overpotentials at a current density of -10 mA cm⁻². FIG. 4A shows the performance of the NiTi alloy catalyst (invention) towards hydrogen evolution reaction. The curves are labeled with the electrolyte temperature imposed during the test, e.g. "NiTi alloy@20°C" relates to a test with an electrolyte temperature of 20°C. FIG. 4B shows the performance of a nickel catalyst (not covered by the invention) for different electrolyte temperatures. FIG. 4C shows the performance of a titanium catalyst (not covered by the invention) for different electrolyte temperatures and FIG. 4D shows that of the state-of-the-art catalyst Platinum. FIG. 4E shows a comparison between the electrocatalytic activities of NiTi alloy and Pt at different temperatures towards hydrogen evolution reaction. The curves of FIG. 4B-4E are labeled in a similar way as FIG. 4A *mutatis mutandis.* FIG. 4F and 4I show the comparisons between the overpotentials measured at 10 and 100 mA.cm⁻² for NiTi alloy and Pt. FIG. 4G shows the stabilities of the NiTi alloy catalysts at different temperatures at a current density of 10 mA.cm⁻². FIG.4H shows the Faradaic efficiency measurement of the hydrogen evolved by the NiTi alloy catalyst at different current densities.

Whilst nickel and titanium show poor performance for hydrogen evolution, generating up to (depending on temperature) 55 mA.cm⁻² and 4 mA.cm⁻², respectively at 0.4 V vs. RHE (Reversible Hydrogen Electrode); the NiTi alloy shows 450 mA.cm⁻² at 0.4 V vs. RHE for a temperature of 80°C, and already about 200 mA.cm⁻² at 40°C. The same NiTi alloy shows excellent stability over a 9 hour measurement. The onset potentials for the reaction decrease significantly as the temperature increases for the NiTi alloy which reaches an optimum at 80 °C. The NiTi alloy catalyst shows significantly lower overpotentials needed to achieve 10 and 100 mA.cm⁻² current densities at a temperature of 80°C. The NiTi alloy catalyst also shows better performances than the Pt catalyst.

The Faradaic Efficiency (percentage of current used for hydrogen evolution) - to confirm there are no parasitic reactions - was measured to be 100% at high current densities for the NiTi alloy catalyst (FIG. 4H).

The expressions "lying in the range" or "varying from ... to ..." are to be understood as including the limits of the range.

## Claims

1. A method for producing hydrogen (102 ; 202), comprising:
- performing a hydrogen evolution reaction through an alkaline water electrolysis or alkaline membrane electrolysis process using an electrochemical cell (101 ; 201) comprising:
(a) an alkaline electrolyte solution (103 ; 203) comprising water,
(b) a cathode (105 ; 205) comprising a hydrogen evolution reaction catalyst, and
(c) an anode (107 ; 207),
wherein the hydrogen evolution reaction catalyst is formed of a nickel-titanium alloy having a nickel atomic percentage lying in the range 50% to 56%, and wherein a temperature of at least 35°C is imposed to the alkaline electrolyte solution.

2. A method according to claim 1, wherein the temperature imposed to the alkaline electrolyte solution (103 ; 203) is at least 50°C.

3. A method according to claim 2, wherein the hydrogen evolution reaction is performed through an alkaline water electrolysis process, and wherein the temperature imposed to the alkaline electrolyte solution (103) is at least 60°C.

4. A method according to claim 3, wherein the temperature imposed to the alkaline electrolyte solution (103) is at least 70°C.

5. A method according to claim 4, wherein the temperature imposed to the alkaline electrolyte solution (103) is at least 80°C.

6. A method according to claim 1 or 2, wherein the hydrogen evolution reaction is performed through an alkaline membrane electrolysis process, and wherein the temperature imposed to the alkaline electrolyte solution (203) is less than 60°C.

7. A method according to any one of claims 1 to 6, wherein the alkaline electrolyte solution (103 ; 203) is a potassium hydroxide or sodium hydroxide aqueous solution.

8. A method according to claim 7, wherein the hydrogen evolution reaction is performed through an alkaline water electrolysis process, and wherein the concentration of the potassium hydroxide or sodium hydroxide aqueous solution varies from 1 M to 6 M.

9. A method according to claim 7, wherein the hydrogen evolution reaction is performed through an alkaline membrane electrolysis process, and wherein the concentration of the potassium hydroxide or sodium hydroxide aqueous solution varies from 0.1 M to 1M.
